# EUROPEAN PATENT APPLICATION

(11) **EP 1 090 681 A1**
(43) Date of publication of application: **11.04.2001**
(21) Application number: 00203502.0
(22) Date of filing: 09.10.2000
(51) Int. Cl.: B01J 19/24, B01J 19/00, C02F 1/52

(54) **Crystallisation reactor**

(30) Priority: 07.10.1999 NL 1013238
(71) Applicant: Paques B.V., NL-8560 AB Balk (NL)
(72) Inventor: Vellinga, Sjoerd Hubertus Jozef, 8458 CP Tjalleberd (NL)
(74) Representative: Jorritsma, Ruurd

(57) **Abstract**

The present invention relates to a reactor for precipitating a substance, such as a salt, from a solution onto a granular material present in the reactor, comprising an essentially cylindrical vessel (1), a base (2) which closes off the vessel at the bottom and contains a feed (5) for the solution, and a discharge, provided at the top of the vessel (1), for the treated solution from which the salt has been at least partially removed by precipitation. The base (2) has a chamber (3) which is essentially concentric with respect to the vessel (1) and to which the feed (5) for the solution is connected, in which chamber (3) mixing of the solution and the granular material takes place.

## Description

The invention relates to a reactor for precipitating a substance, such as a salt, from a solution onto a granular material present in the reactor, comprising an essentially cylindrical vessel, a discharge, provided at the top of the vessel, for the treated solution, from which the substance has been at least partially removed by precipitation, and a chamber at the bottom of the vessel, to which chamber a feed for the solution is connected, which feed opens essentially tangentially into the chamber to generate a rotary flow, such that a centrifugal pump action is generated by the incoming solution.

Such a reactor is known, for example from GB-A 987 638. The substance concerned, such as a salt, crystallises on the grains of the granular material, such as sand. The precipitation of CaCO₃ in the provision of drinking water and of CaF₂ in the metal industry can be mentioned as examples.

The advantage of forming a precipitate in the form of crystallisation nuclei is that settling or post-filtration and drying of the sludge obtained is then no longer required. This disadvantage does arise in the case of precipitation in the form of flocks.

Nevertheless, the known crystallisation reactors also have a number of disadvantages. Some reactors have a base with a large number of inlet nozzles for the solution and injection nozzles for the chemicals which are required in the precipitation process. This large number of nozzles is necessary in order to obtain uniform flow (plug flow) over the width of the reactor. However, such a construction is expensive and liable to require maintenance.

Another type of reactor has a single injection nozzle for chemicals and a relatively small number of inlet nozzles for the solution. However, the result of this construction is that uniform flow is not obtained in the vessel. A core region with fairly high flow rates is formed, surrounded by a relatively calm region. As a consequence of this, not very efficient mixing of solution and grains is obtained, which is not beneficial for the precipitation process. Moreover, there is the risk of formation of precipitate other than on the grains. The treated liquid is turbid as a result and post-filtration is necessary.

The aim of the invention is to provide a reactor of the type described above which does not have these disadvantages. This aim is achieved in that a vertically oriented feed for the granular material opens into the chamber, such that under the influence of the vortex motion generated in the chamber a flow directed towards the chamber is promoted by the feed.

The presence of a mixing chamber directly in the position where the solution is introduced into the reactor has the advantage that fairly complete mixing of grains and solution can already be achieved in an early stage of the process taking place in the reactor. This mixing is favourably influenced because the incoming solution generates a centrifugal pump action. The vortex effect resulting from this first of all promotes intensive mixing of grains and solution.

Furthermore, as a consequence of the circular flow in the centre of the turbulence chamber a vacuum is generated, as is the case with a centrifugal pump. This vacuum leads to suction being exerted on the granular material located above the turbulence chamber. The feed promoted in this way ensures that there is always sufficient granular material in the turbulence chamber, such that precipitation can take place immediately after the solution enters the turbulence chamber.

Because a vertically oriented feed for the granular material opens into the turbulence chamber a suction flow directed towards the chamber is promoted by the feed, under the influence of the vortex motion generated in the chamber. Consequently the amounts of the solution and the granular material supplied can be matched to one another within certain limits.

The feed can be a short tube, the bottom end of which opens more or less centrally into the swirling solution. A vacuum prevails in the centre of the vortex, which generates suction flow in the tube.

The flow of the granular material can be facilitated if the short tube is widened at the bottom end protruding into the chamber and the bottom of the chamber has an elevation that extends into the short tube. Preferably, the widened end of the short tube and the elevation both have a conical shape tapering towards the top. Such shapes promote the lateral deflection of the flow directed vertically downwards through the tube.

The mixture is then able to flow upwards over the outside of the short tube, in order to obtain the upward plug flow in the reactor. This uniform upward flow or plug flow of the solution can be promoted if the base widens conically towards the top and the chamber is of essentially cylindrical construction. As a consequence of the circular motion of the solution on leaving the chamber, the flow is able to follow the wall of the conical shape, as a result of which it will not be core flow but the desired uniform plug flow that is produced.

In order to prevent this circular flow from continuing too far into the expanded granular material, however, the base has arresting elements projecting radially inwards to arrest the circular flow.

The mixing in the turbulence chamber can be even further improved if the feed comprises a short tube that has an internal surface provided with blades in threaded form to bring the solution into rotary motion.

Furthermore, a connection is provided for feeding chemicals into the turbulence chamber, which connection is located in the direction of flow of the solution immediately downstream of the orifice of the feed for the solution. This positioning of the connection provides direct mixing of chemicals with the solution, such that instantaneous precipitation can take place on the granular material that is fed, by the centrifugal action in the turbulence chamber, from the higher part of the reactor. This mixing of solution and chemicals is further intensified because the solution enters the turbulence chamber with a rotary motion under the influence of the blades in the feed.

Intensive mixing of the granular material and the chemicals is, as already stated, obtained by the centrifugal pump action in the turbulence chamber. It is therefore no longer necessary to feed the solution and the chemicals via an injection lance protruding a long way into the reactor. Consequently the problem of wear of the lance under the influence of the continuous abrasive action of granular material flowing over it, such as arises with known reactors, therefore also no longer arises.

The invention will be explained in more detail below with reference to an illustrative embodiment shown in the figures.
Figure 1 shows a partial side view of the reactor according to the invention.
Figure 2 shows a vertical section through the reactor.
Figure 3 shows a section along III-III in Figure 2.
Figure 4 shows a section along IV-IV in Figure 2.

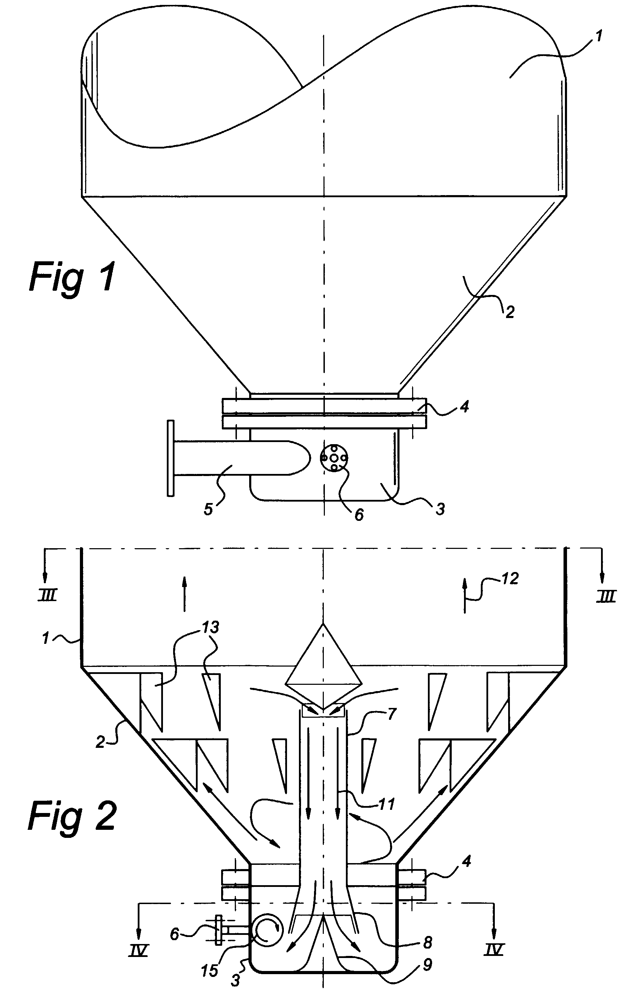

The reactor shown in Figure 1 comprises an essentially cylindrical vessel 1, only the lower section of which is indicated. This cylindrical vessel is closed off at the bottom by a conically tapering base 2, which, in turn, is closed off by a turbulence chamber 3. The base 2 and the turbulence chamber 3 are detachably fixed to one another by means of a flanged joint 4.

A short feed tube 5 opens tangentially into the turbulence chamber 3. A feed 6 for chemicals is also provided.

As can be seen in the section in Figure 2, there is a concentric, vertically oriented short tube 7 located in the base 2 and the turbulence chamber 3 . The bottom end 8 of this short tube 7 is widened conically downwards. This end 8 surrounds the cone 9 which tapers towards the top and is located on the base of the turbulence chamber 3.

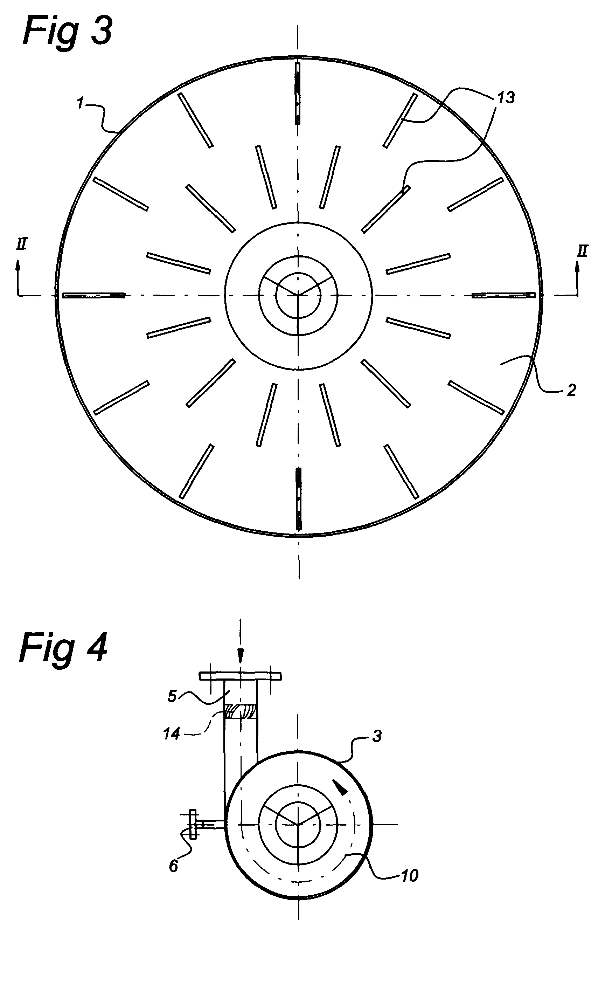

When the reactor is in operation the solution to be treated is fed via the tangential feed 5, as a result of which the circular vortex motion 10 shown in Figure 4 is generated in the turbulence chamber 3. A vacuum prevails in the centre of this vortex motion 10 (centrifugal action), as a consequence of which a downward flow 11 is generated via the interior of the vertical short tube 7. At the bottom of the short tube 7 this downward flow 11 is deflected laterally by the conical shapes of the bottom end of the short tube 7 as well as by the cone 9. The flow is then deflected upwards in the turbulence chamber.

The downward flow 11 through the short tube 7 provides a controlled feed of grains which are present in the grain bed in the vessel 1. This grain feed is matched to the feed of the solution, since the degree of vortex motion also influences the vacuum in the vertical short tube 7.

As a consequence of these flows, intensive mixing of the solution with the granular material is already obtained in the turbulence chamber 3. Mixing with the chemicals (such as milk of lime and caustic soda) is also obtained in this chamber, such that direct precipitation on the granular material is ensured and flocculation is prevented.

The base 2 of the reactor has a slope such that the upward flow issuing from the turbulence chamber 3 is able to continue to follow the wall thereof. To prevent the upward flow 12 in the vessel 1 also acquiring a circular nature, arresting plates 13 projecting inwards have been arranged on the wall 2. By this means an upward flow 12 that is uniform over the width of the vessel 1 is obtained, which has a beneficial effect on the crystallisation process (plug flow).

To improve mixing in the turbulence chamber still further, blades 14 have been fitted in the short tube 5 of the feed. These blades generate the rotary motion 15 in the solution shown in Figure 2, as a result of which intensive mixing takes place with the chemicals fed directly downstream of the orifice of the short tube.

## Claims

1. Reactor for precipitating a substance, such as a salt, from a solution onto a granular material present in the reactor, comprising an essentially cylindrical vessel (1), a discharge, provided at the top of the vessel (1), for the treated solution, from which the substance has been at least partially removed by precipitation, and a chamber (3) at the bottom of the vessel (1), to which chamber (3) a feed (5) for the solution is connected, which feed (5) opens essentially tangentially into the chamber (3) to generate a rotary flow, such that a centrifugal pump action is generated by the incoming solution, characterised in that a vertically oriented feed (7) for the granular material opens into the chamber (3), such that under the influence of the vortex motion generated in the chamber (3) a flow directed towards the chamber (3) is promoted by the feed (7).

2. Reactor according to Claim 1, wherein the vessel (1) is closed off at the bottom by a base (2) in which the chamber (3) is accommodated.

3. Reactor according to Claim 1 or 2, wherein the base (2) and/or the chamber (3) are/is arranged concentrically.

4. Reactor according to Claim 3, wherein the feed is constructed as a short tube (7).

5. Reactor according to Claim 4, wherein the short tube (7) is widened at the bottom end (8) protruding into the chamber.

6. Reactor according to Claim 4 or 5, wherein the base of the chamber (3) has an elevation (9) that extends into the short tube.

7. Reactor according to Claim 5 or 6, wherein the widened end (8) of the short tube (7) and the elevation (9) both have a conical shape tapering towards the top.

8. Reactor according to one of the preceding claims, wherein the base (2) is constructed such that it widens conically towards the top and the chamber (3) is of essentially cylindrical construction.

9. Reactor according to Claim 8, wherein the base (2) has arresting elements (13) projecting radially inwards to arrest the circular flow of the solution.

10. Reactor according to one of the preceding claims, wherein the feed into the chamber (3) comprises a short tube (5), which has an internal surface provided with blades (14) in threaded form to bring the solution into rotary motion.

11. Reactor according to one of the preceding claims, wherein a connection (6) for feeding chemicals is provided on the chamber (3), which connection (6) is located in the direction of flow of the solution immediately downstream of the orifice of the feed (5) for the solution.
